# EUROPÄISCHE PATENTSCHRIFT

(11) **EP 3 293 131 B1**
(45) Veröffentlichungstag und Bekanntmachung des Hinweises auf die Patenterteilung: **27.05.2020**
(21) Anmeldenummer: 17001485.6
(22) Anmeldetag: 06.09.2017
(51) Int. Cl.: B65G 53/52, F16L 37/096

(54) **KUPPLUNG ZUR VERBINDUNG ZWEIER LEITUNGEN EINER SAUGFÖRDERANLAGE MITEINANDER SOWIE SAUGFÖRDERANLAGE**
COUPLING FOR THE CONNECTION OF TWO LINES IN A SUCTION CONVEYING SYSTEM TO EACH OTHER AND SUCTION CONVEYING SYSTEM
ACCOUPLEMENT PERMETTANT LE RACCORDEMENT DE DEUX CONDUITS D'UNE INSTALLATION DE TRANSPORT PAR ASPIRATION AINSI QU'INSTALLATION DE TRANSPORT PAR ASPIRATION

(30) Priorität: 12.09.2016 DE 102016011204
(43) Veröffentlichungstag der Anmeldung: 14.03.2018
(73) Patentinhaber: Motan Holding GmbH, 78467 Konstanz (DE)
(72) Erfinder: Wolfgang, Karl, 88299 Leutkirch (DE)
(74) Vertreter: Kohl, Karl-Heinz

(56) Entgegenhaltungen:
- WO-A1-2010/007084
- DE-B3-102008 014 255
- DE-U1-202016 104 141
- US-A1- 2010 078 265

## Beschreibung

Die Erfindung betrifft eine Kupplung zur Verbindung zweier Leitungen einer Saugförderanlage sowie eine Saugförderanlage mit solchen Kupplungen.

Solche Saugförderanlagen haben beispielsweise Vorratsbehälter, in denen Schüttgut gelagert ist. Jeder Vorratsbehälter kann über Leitungen mit Empfängern, beispielsweise mit Verarbeitungsmaschinen für die Schüttgüter, verbunden werden. Um jeden Vorratsbehälter mit jedem Empfänger verbinden zu können, werden Kupplungsbahnhöfe verwendet, an welche die von den Vorratsbehältern kommenden Leitungen fest angeschlossen sind. Über Kupplungen werden diese Leitungen mit zu den jeweiligen Empfängern führenden Saugleitungen verbunden. Die Saugleitungen, die zu den Empfängern führen, sind flexible Schläuche, die in der Praxis in der Regel verdreht bzw. verdrillt oder auch mit anderen Schläuchen innerhalb der Saugförderanlege verschlungen sind. Dadurch wirkt beim Einstecken des Gegenkupplungsstückes des flexiblen Schlauches in das Kupplungsstück innerhalb des Kupplungsbahnhofes eine starke Rückstellkraft, die das Kuppeln erschwert. Um die einwandfreie Kupplung zwischen zwei Leitungen sicherzustellen, ist es bekannt, am Kupplungsstück einen Sensor, insbesondere einen RFID-Sensor, und an der flexiblen Leitung einen entsprechenden Transponder vorzusehen. Beim Kuppelvorgang ist es erforderlich, dass der Transponder genau dem Sensor gegenüberliegt. Es bereitet in der Praxis wegen der Rückstellkräfte Schwierigkeiten, die flexiblen Leitungen so an die Angebotsleitungen anzuschließen, dass der Transponder genau gegenüber dem Sensor ausgerichtet ist.

DE202016104141U offenbart eine lösbare Rohrkupplung eines pneumatischen Fördersystems. Ein RFID-Tag und ein entsprechender RFID-Leser werden in jeweiligen Kupplungsteilen zur eindeutigen Kennzeichnung vorgesehen.

WO2010007084 A1 offenbart eine Verteilerstation einer pneumatischen Saugförderanlage für Schüttgut.

Der Erfindung liegt darum die Aufgabe zugrunde, die gattungsgemäße Kupplung sowie die Saugförderanlage so auszubilden, dass die Leitungen einfach zusammengesteckt werden können.

Diese Aufgabe wird bei der gattungsgemäßen Kupplung erfindungsgemäß mit den Merkmalen des Anspruches 1 und bei der Saugförderanlage mit den Merkmalen des Anspruches 12 gelöst.

Die erfindungsgemäße Kupplung ist so ausgebildet, dass das Gegenkupplungsstück der flexiblen Leitung in jeder beliebigen Lage in die erste Leitung gesteckt werden kann. Da der Haltering drehbar gelagert ist, kann der an ihm befestigte Transponder durch Drehen des Halteringes so verstellt werden, dass der Transponder dem Sensor gegenüberliegt. Dann ist eine zuverlässige Signalübertragung an eine Steuerung der Saugförderanlage ermöglicht, durch die signalisiert wird, dass die Leitungen ordnungsgemäß zusammengesteckt sind. Auch wenn die flexible Leitung sehr stark um ihre Achse verdreht oder auch mit anderen flexiblen Schläuchen der Saugförderanlage verwickelt sein sollte, lassen sich solche flexiblen Leitungen problemlos zusammenstecken, weil beim Steckvorgang nicht auf die Lage des Transponders bezüglich des Sensors geachtet werden muss. Der Haltering lässt sich gegenüber der flexiblen Leitung in die erforderliche Lage drehen.

Um die Verstellung des Halteringes zu erleichtern, ist es vorteilhaft, den Haltering drehfest mit einem Griffstück zu verbinden. Mittels des Griffstückes lässt sich der Haltering sehr einfach verdrehen.

Bei einer vorteilhaften Ausführungsform ist das Griffstück hülsenförmig ausgebildet und sitzt auf dem Gegenkupplungsstück. Das Griffstück kann dadurch lang ausgebildet sein, so dass es bequem von der Hand des Benutzers umgriffen und gedreht werden kann.

Vorteilhaft ist der Haltering als flache Ringscheibe ausgebildet, so dass sie nur wenig Bauraum benötigt.

Vorteilhaft ist es, wenn der Haltering wenigstens einen Ausschnitt für den Eingriff eines Rastelementes aufweist. Mit ihm kann der Haltering und damit die flexible Leitung gegen unbeabsichtigtes Abziehen von der ersten Leitung gesichert werden.

Bei einer einfachen Ausführungsform weist das Rastelement eine Rastnase auf, die den Haltering in Kupplungsstellung übergreift. Auf diese Weise ergibt sich ein sicherer Schutz gegen unbeabsichtigtes Abziehen der flexiblen Leitung.

Vorteilhaft ist es, wenn am Kupplungsstück ein Deckel zum Schließen des Kupplungsstückes schwenkbar gelagert ist. Ist die flexible Leitung mit ihrem Gegenkupplungsstück nicht in die erste Leitung gesteckt, wird das Kupplungsstück durch den Deckel geschlossen. Da er schwenkbar am Kupplungsstück gellagert ist, ist er jederzeit leicht greifbar.

Von Vorteil ist, wenn der Deckel in Richtung auf seine Offenstellung federbelastet ist. Dadurch ist sichergestellt, dass der Deckel in seiner Offenstellung das Einstecken der flexiblen Leitung nicht behindert.

Damit der Deckel in der Schließstellung trotz Federbelastung gehalten wird, wird er in vorteilhafter Weise durch das Rastelement gesichert. Wird der Deckel durch das Rastelement freigegeben, kann der Deckel in Folge der Federbelastung selbsttätig in seine Offenstellung schwenken.

Bei einer einfachen Ausführungsform ist der Deckel mit einer abstehenden Zunge versehen, die in Schließstellung des Deckels vom Rastelement übergriffen ist. Die Zunge kann einstückig mit dem Deckel ausgebildet sein. Es ist aber auch möglich, die Zunge gesondert am Deckel zu befestigen.

Um das Rastelement in einfacher Weise betätigen zu können, ist es vorteilhaft als zweiarmiger Hebel ausgebildet, dessen einer Hebelarm durch die Rastnase gebildet wird. Mit dem anderen Hebel lässt sich die Rastnase aus ihrer Raststellung in eine Freigabestellung verschwenken.

Die Saugförderanlage mit den erfindungsgemäßen Kupplungen ermöglicht eine einfache Kupplung der verschiedenen flexiblen Leitungen mit den im Kupplungsbahnhof vorhandenen Anschlüssen der ersten Leitungen.

Der Anmeldungsgegenstand ergibt sich nicht nur aus dem Gegenstand der einzelnen Ansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in Seitenansicht ein auf einer Angebotsleitung sitzendes Kupplungsstück einer erfindungsgemäßen Kupplung,
- Fig. 2: eine flexible Saugleitung mit einem Gegenkupplungsstück der erfindungsgemäßen Kupplung vor dem Zusammenfügen mit der Angebotsleitung,
- Fig. 3: die in die Angebotsleitung gesteckte Saugleitung,
- Fig.4: eine Ansicht in Richtung des Pfeiles IV in Fig. 2,
- Fig. 5: eine Ansicht in Richtung des Pfeiles V in Fig. 3.

Die Kupplung dient dazu, eine flexible Saugleitung 1 mit einer Angebotsleitung 2 zu koppeln. Die Saugleitung 1 und die Angebotsleitung 2 sind Teil einer Saugförderanlage für Schüttgüter. Solche Saugförderanlagen dienen beispielsweise zum Verteilen von Kunststoffgranulat oder Pulver auf verschiedene Maschinen oder Anlage, in denen das Granulat oder Pulver weiterverarbeitetet wird. Die Angebotsleitungen und die zugehörigen Kupplungen und Saugleitungen bilden beispielsweise einen sogenannten Kupplungsbahnhof, der es erlaubt, die Förderwege des Schüttgutes nach Bedarf zu konfigurieren, indem die Saugleitung 1 mit der jeweils gewünschten Angebotsleitung 2 verbunden wird. Die Kupplung lässt sich einfach ein- und auskuppeln und ist so ausgebildet, dass das Schüttgut materialschonend durch die Kupplung strömt. Außerdem ist die Kupplung so gestaltet, dass sie gasdicht ist, so dass keine Fremdluft in die Saugförderanlage gesaugt wird.

Auf dem Ende der Angebotsleitung 2 ist ein Kupplungsstück 3 befestigt, das als Hülse ausgebildet ist und aus Metall oder einem harten Kunststoff besteht. Das Kupplungsstück 3 ragt axial über das freie Ende der Angebotsleitung 2.

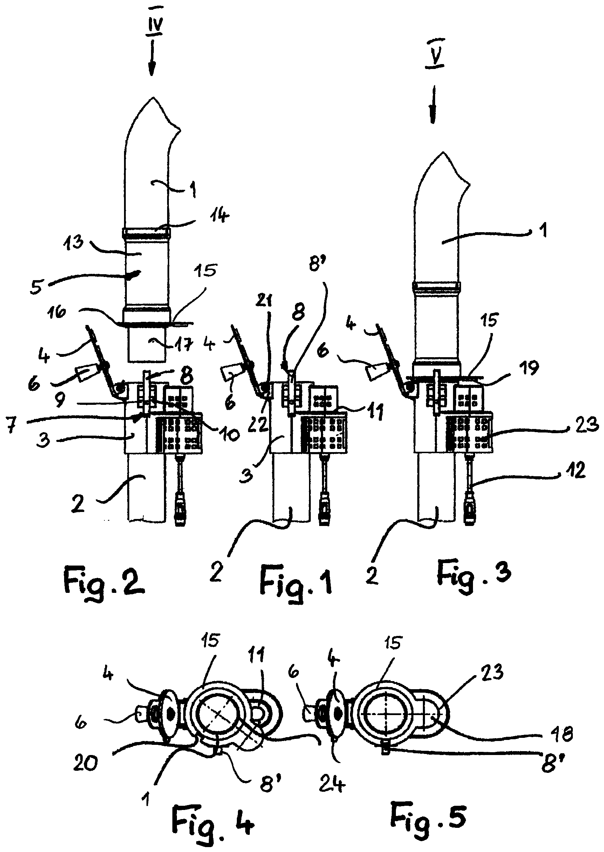

An der Außenwand des Kupplungsstückes 3 ist ein Deckel 4 schwenkbar gelagert, mit dem die Angebotsleitung 2 luftdicht verschlossen werden kann, wenn die Angebotsleitung 2 nicht mit einer Saugleitung 1 gekoppelt ist. In den Fig. 1 bis 5 ist der Deckel 4 jeweils in Offenstellung gezeigt, in der er so weit nach außen geschwenkt ist, dass die Saugleitung 1 mit einem Gegenkupplungsstück 5 leicht in das Kupplungsstück 3 gesteckt werden kann.

Der Deckel 4 steht vorteilhaft unter der Kraft wenigstens einer Feder, die den Deckel 4 in die in den Fig. 1 bis 5 dargestellte Offenstellung belastet. An seiner Außenseite ist der Deckel 4 mit einer Handhabe 6 versehen, mit welcher er leicht in die Schließstellung verstellt werden kann, in der der Deckel 4 dichtend auf der Stirnseite des hülsenförmigen Kupplungsstückes 3 aufliegt.

Im Betrieb der Saugförderanlage wird der Deckel 4 aufgrund des Unterdruckes in den Leitungen der Saugförderanlage fest gegen die Stirnseite des Kupplungsstückes 3 gezogen, so dass ein dichter Abschluss gewährleistet ist.

An der Außenseite des Kupplungsstückes 3 ist eine Halteeinrichtung 7 vorgesehen. Sie hat ein schwenkbar gelagertes Rastelement 8, das als zweiarmiger Hebel ausgebildet ist. Sein einer Arm ist als Rastnase 8'ausgebildet, die axial über die Stirnseite des Kupplungsstückes 3 vorsteht. Das Rastelement 8 ist unter Federkraft schwenkbar zwischen zwei Armen 9, 10 an der Außenseite des Kupplungsstückes 3 gelagert.

Die Halteeinrichtung 7 ist mit Abstand zur Lagerung des Deckels 4 angeordnet. Das Rastelement 8 liegt unter Federkraft so an einem (nicht dargestellten) Anschlag an, dass die Rastnase 8' im Einsteckweg des Gegenkupplungsstückes 5 liegt.

Vorteilhaft hat die Halteeinrichtung 7 einen Winkelabstand von 90° zur Lagerung des Deckels 4.

Weiter steht von der Außenseite des hülsenförmigen Kupplungsstückes 3 eine Haltelasche 11 ab, mit der ein RFID-Sensor 12 gehalten wird. Er ist mit einer Steuerung verbunden und sendet an sie ein Sensorsignal, sobald die Saugleitung 1 mit dem Gegenkupplungsstück 5 in das Kupplungsstück 3 der Angebotsleitung 2 gesteckt und ordnungsgemäß verriegelt ist. Diese Sensorsignale können drahtlos, aber auch drahtgebunden an die Steuerung weitergeleitet werden.

Die Haltelasche 11 befindet sich mit Abstand zur Deckellagerung sowie zur Halteeinrichtung 7. Im dargestellten Ausführungsbeispiel ist die Haltelasche 11 vorteilhaft der Deckellagerung diametral gegenüberliegend an der Au-ßenseite des Kupplungsstückes 3 vorgesehen.

Das Gegenkupplungsstück 5 ist wie das Kupplungsstück 3 hülsenförmig ausgebildet und umgibt das entsprechende Ende der flexiblen Saugleitung 1. Auf dem Gegenkupplungsstück 5 sitzt ein Griffstück 13, das zylindrisch ausgebildet ist.

Das Griffstück 13 liegt zwischen einem auf der Saugleitung 1 befestigten Sicherungsring 14 und einer flachen ringscheibenförmigen Arretierscheibe 15. Sie ist um die Achse der Saugleitung 1 sowie des Gegenkupplungsstückes 5 frei drehbar. Die Arretierscheibe 15 liegt auf einem radial nach außen vorstehenden Ringflansch 16 einer Kupplungshülse 17 auf, die Teil des Gegenkupplungsstückes 5 ist und die in das hülsenförmige Kupplungsstück 3 gesteckt wird.

Die Arretierscheibe 15 ist mit einer radial vorstehenden Lasche 18 versehen, an deren Unterseite ein Transponder 19 befestigt ist, der mit dem Sensor 12 zusammenwirkt.

Die Arretierscheibe 15 ist außerdem am Umfang mit einem Ausschnitt 20 versehen, in den die Rastnase 8' in der Verriegelungsstellung eingreift. Die Größe des Ausschnittes 20 ist an die Rastnase 8' angepasst. Dadurch wird erreicht, dass in der verriegelten Stellung die Saugleitung 1 sicher mit der Angebotsleitung 2 verbunden ist.

Soll die Saugleitung 1 mit der Angebotsleitung 2 verbunden werden, wird zunächst der Deckel 4 um eine tangential zum Kupplungsstück 3 liegende Achse 21 so weit nach außen geschwenkt, dass die Kupplungshülse 17 der Saugleitung 1 in das hülsenförmige Kupplungsstück 3 gesteckt werden kann. In der Offenstellung liegt der Deckel 4 mit seinem Rand an einer die Schwenkachse 21 aufnehmenden Halterung 22 an.

Die Rastnase 8' ist unter Federkraft so weit nach innen geschwenkt, dass sie im Bewegungsweg der Arretierscheibe 15 beim Einsteckvorgang liegt. Die Rastnase 8' hat eine schräge Stirnseite, auf welche die Arretierscheibe 15 mit ihrem Rand beim Einstecken der Kupplungshülse 17 in das Kupplungsstück gelangt. Die Rastnase 8' wird über die Schrägfläche gegen Federkraft nach außen geschwenkt, bis die Arretierscheibe 15 auf der Stirnseite des Kupplungsstückes 3 aufliegt. Dann kann die Rastnase 8' unter Federkraft in ihre Arretierstellung zurück schwenken, in der die Rastnase die Arretierscheibe 15 übergreift.

Da die Arretierscheibe 15 um die Achse des Gegenkupplungsstückes 5 frei drehbar ist, kann die Saugleitung 1 in jeder Lage mit der Kupplungshülse 17 in das Kupplungsstück 3 gesteckt werden. Die Arretierscheibe 15 lässt sich so drehen, dass der Transponder 19 vom Sensor 12 erfasst werden kann.

Das Kupplungsstück 3 ist für die leichte Montage des Sensors 12 vorteilhaft mit einer abnehmbaren Blende 23 versehen.

Vorteilhaft ist es, wenn die Arretierscheibe 15 fest mit dem Griffstück 13 verbunden ist, vorteilhaft mittels Schrauben. In diesem Fall sitzt das Griffstück 13 drehbar auf der Saugleitung 1 und wird zusammen mit der Arretierscheibe 15 so gedreht, dass der Transponder 19 dem Sensor 12 gegenüberliegt.

In dieser ausgerichteten Lage liegt der Ausschnitt 20 in der Arretierscheibe 15 der Rastnase 8' der Halteeinrichtung 7 gegenüber, so dass die Rastnase in der beschriebenen Weise in den Ausschnitt 20 eingreift und die Arretierscheibe vorteilhaft übergreift.

Die Rastnase 8' und die Arretierscheibe 15 können auch so ausgebildet sein, dass die Rastnase 8' die Arretierscheibe 15 nicht übergreift, sondern lediglich in den Ausschnitt 20 eingreift. Dann dient die Rastnase 8' lediglich dazu, die Arretierscheibe 15 gegen Drehen zu sichern. Die Kupplungshülse 17 ist nämlich so ausgebildet, dass sie mit ihrer Außenwand an der Innenwand des Kupplungsstückes 3 weitgehend gasdicht anliegt. Aufgrund des in der Förderanlage herrschenden Unterdruckes wird die Kupplungshülse 17 fest in das Kupplungsstück 3 gezogen. An der Unterseite der Arretierscheibe 15 befindet sich eine (nicht dargestellte) Flachdichtung, die am Rand des Kupplungsstückes 3 aufliegt und die gasdichte Verbindung zwischen der Saugleitung 1 und der Angebotsleitung 2 unterstützt. Da die Abdichtung mittels der Flachdichtung erfolgt, kann die Verbindung auch wieder leicht gelöst werden.

Die Flachdichtung befindet sich außerhalb des Strömungspfades des Schüttgutes durch die Kupplung. Darum kommt das Schüttgut nur mit dem Material des Kupplungsstückes 3 und Gegenkupplungsstückes 5 in Kontakt. Eine Schädigung des Fördergutes durch Dichtungen und andere Fremdmaterialien wird vermieden.

Beim Abziehen der Saugleitung 1 von der Angebotsleitung 2 verhindert der Sicherungsring 14, dass das Griffstück13 einschließlich der Arretierscheibe 15 auf der Saugleitung verschoben wird.

Da die Arretierscheibe 15 um die Achse der Saugleitung 1 drehbar ist, kann sie auch in verdrilltem Zustand in die Angebotsleitung 2 gesteckt werden. Die Arretierscheibe 15 lässt sich so verdrehen, dass der Transponder 19 dem Sensor 12 gegenüberliegt, so dass die Steuerung ein Signal erhält, dass die Saugleitung 1 ordnungsgemäß mit der Angebotsleitung 2 gekuppelt ist. Da die Arretierscheibe 15 vorteilhaft drehfest mit dem hülsenförmigen Griffstück 13 verbunden ist, lässt sich die Arretierscheibe 15 bequem mittels des Griffstückes 13 in die erforderliche Drehlage bringen.

Bei einer vorteilhaften Ausbildung wird der Deckel 4 in der Schließstellung durch die Halteeinrichtung 7 gehalten. Hierfür ist am Rand des Deckels 4 eine radial vorstehende Zunge 24 vorgesehen (fig. 5), die in Schließstellung des Deckels 4 von der Rastnase 8' der Halteeinrichtung übergriffen wird. Wird die Rastnase 8' in ihre Freigabestellung zurückgeschwenkt, gibt sie den Deckel 4 frei, der dann unter Federkraft in seine Offenstellung geschwenkt wird.

## Patentansprüche

1. Kupplung zur Verbindung zweier Leitungen einer Saugförderanlage miteinander, mit einer ersten und einer zweiten Leitung, mit einem an der ersten Leitung vorgesehenen Kupplungsstück, mit einem an der ersten Leitung vorgesehenen Sensor, mit einem an der zweiten, flexibel ausgebildeten Leitung vorgesehenen Transponder und mit einem an der zweiten Leitung vorgesehenen Gegenkupplungsstück, das in das Kupplungsstück steckbar ist, wobei auf der zweiten Leitung (1) ein den Transponder (19) tragender Haltering (15) um die Achse des Gegenkupplungsstückes (5) frei drehbar ist, und dass dem Transponder (19) der Sensor (12) an der ersten Leitung (2) zugeordnet ist.

2. Kupplung nach Anspruch 1,
**dadurch gekennzeichnet, dass** der Haltering (15) drehfest mit einem Griffstück (13) verbunden ist.

3. Kupplung nach Anspruch 2,
**dadurch gekennzeichnet, dass** das Griffstück (13) hülsenförmig ausgebildet ist und auf dem Gegenkupplungsstück (5) sitzt.

4. Kupplung nach einem der Ansprüche 1 bis 3,
**dadurch gekennzeichnet, dass** der Haltering (15) als flache Ringscheibe ausgebildet ist.

5. Kupplung nach einem der Ansprüche 1 bis 4,
**dadurch gekennzeichnet**, das der Haltering (15) mit wenigstens einem Ausschnitt (20) für den Eingriff eines Rastelementes (8) versehen ist.

6. Kupplung nach Anspruch 5,
**dadurch gekennzeichnet, dass** das Rastelement (8) eine Rastnase (8') aufweist, die den Haltering (15) in Kupplungsstellung übergreift.

7. Kupplung nach einem der Ansprüche 1 bis 6,
**dadurch gekennzeichnet, dass** am Kupplungsstück (3) ein Deckel (4) zum Schließen des Kupplungsstückes schwenkbar gelagert ist.

8. Kupplung nach Anspruch 7,
**dadurch gekennzeichnet**, das der Deckel (4) in Richtung auf eine Offenstellung federbelastet ist.

9. Kupplung nach Anspruch 7 oder 8,
**dadurch gekennzeichnet**, das der Deckel (4) in Schließstellung durch das Rastelement (8) gehalten ist.

10. Kupplung nach einem der Ansprüche 7 bis 9,
**dadurch gekennzeichnet, dass** der Deckel (4) eine abstehende Zunge (24) aufweist, die in Schließstellung des Deckels (4) vom Rastelement (8) übergriffen ist.

11. Kupplung nach einem der Ansprüche 6 bis 10,
**dadurch gekennzeichnet, dass** das Rastelement (8) ein zweiarmiger Hebel ist, dessen einer Hebelarm durch die Rastnase (8') gebildet ist.

12. Saugförderanlage mit flexiblen Sendeleitungen und Angebotsleitungen, die über Kupplungen gemäß einem der Ansprüche 1 bis 11 zusammensteckbar sind.

## Claims

1. Coupling for the connection of two lines of a suction conveying system to each other, with a first and a second line, with a coupling piece provided on the first line, with a sensor provided on the first line, with a transponder provided on the second, flexibly designed line and with a counter-coupling piece provided on the second line, which can be inserted into the coupling piece, wherein on the second line (1) a retaining ring (15) that carries the transponder (19) can be freely rotated around the axis of the counter-coupling piece (5), and that the transponder (19) is assigned the sensor (12) on the first line (2).

2. Coupling according to claim 1,
**characterized in that** the retaining ring (15) is non-rotatably connected with a handle piece (13).

3. Coupling according to claim 2,
**characterized in that** the handle piece (13) has a sleeve-like design and rests on the counter-coupling piece (5).

4. Coupling according to one of claims 1 to 3,
**characterized in that** the retaining ring (15) is designed as a flat ring disc.

5. Coupling according to one of claims 1 to 4,
**characterized in that** the retaining ring (15) is provided with at least one cutout (20) for engagement by a latching element (8).

6. Coupling according to claim 5,
**characterized in that** the latching element (8) has a latch nose (8') that overlaps the retaining ring (15) in the coupling position.

7. Coupling according to one of claims 1 to 6,
**characterized in that** a cover (4) is swivel-mounted on the coupling piece (3) for closing the coupling piece.

8. Coupling according to claim 7,
**characterized in that** the cover (4) is spring loaded in the direction toward an open position.

9. Coupling according to claim 7 or 8,
**characterized in that** the cover (4) is held in the closed position by the latching element (8).

10. Coupling according to one of claims 7 to 9,
**characterized in that** the cover (4) has a protruding tongue (24), which is overlapped by the latching element (8) in the closed position of the cover (4).

11. Coupling according to one of claims 6 to 10,
**characterized in that** the latching element (8) is a two-armed lever, whose one lever arm is comprised of the latch nose (8').

12. Suction conveying system with flexible transmission lines and supply lines, which can be plugged together via couplings according to one of claims 1 to 11.

## Revendications

1. Accouplement, permettant le raccordement de l'autre deux conduits d'une installation de transport par aspiration, pourvu d'un premier et d'un deuxième conduit, pourvu d'une pièce de couplage prévue sur le premier conduit, pourvu d'un capteur prévu sur le premier conduit, pourvu d'un transpondeur prévu sur le deuxième conduit, conçu sous forme flexible et pourvu d'une pièce de couplage antagoniste, prévue sur le deuxième conduit, qui est enfichable dans la pièce de couplage, sur le deuxième conduit (1), une bague de retenue (15) portant le transpondeur (19) étant librement rotative autour de l'axe de la pièce de couplage antagoniste (5) et au transpondeur (19) étant associé le capteur (12) sur le premier conduit (2).

2. Accouplement selon la revendication 1,
**caractérisé en ce que** la bague de retenue (15) est assemblée de manière solidaire en rotation avec une poignée (13).

3. Accouplement selon la revendication 2,
**caractérisé en ce que** la poignée (13) est conçue en forme de douille et repose sur la pièce de couplage antagoniste (5).

4. Accouplement selon l'une quelconque des revendications 1 à 3,
**caractérisé en ce que** la bague de retenue (15) est conçue sous la forme d'une rondelle annulaire plate.

5. Accouplement selon l'une quelconque des revendications 1 à 4,
**caractérisé en ce que** la bague de retenue (15) est munie d'au moins une découpe (20) pour l'engagement d'un élément d'enclenchement (8).

6. Accouplement selon la revendication 5,
**caractérisé en ce que** l'élément d'enclenchement (8) comporte un ergot d'enclenchement (8') qui en position d'accouplement recouvre la bague de retenue (15).

7. Accouplement selon l'une quelconque des revendications 1 à 6,
**caractérisé en ce que** sur la pièce de couplage (3) est logé en pivotement un couvercle (4), destiné à fermer la pièce de couplage.

8. Accouplement selon la revendication 7,
**caractérisé en ce que** le couvercle (4) est contraint par ressort dans la direction d'une position d'ouverture.

9. Accouplement selon la revendication 7 ou 8,
**caractérisé en ce que** le couvercle (4) est maintenu en position de fermeture par l'élément d'enclenchement (8).

10. Accouplement selon l'une quelconque des revendications 7 à 9,
**caractérisé en ce que** le couvercle (4) comporte une languette (24) saillante, qui en position de fermeture du couvercle (4) est recouverte par l'élément d'enclenchement (8).

11. Accouplement selon l'une quelconque des revendications 6 à 10,
**caractérisé en ce que** l'élément d'enclenchement (8) est un levier à deux bras, dont l'un des bras de levier est formé par l'ergot d'enclenchement (8').

12. Installation de transport par aspiration, pourvu de conduits de transmission et de conduits d'alimentation qui sont enfichables les uns dans les autres par l'intermédiaire d'accouplements selon l'une quelconque des revendications 1 à 11.
